(19) **Europäisches Patentamt**

**European Patent Office**

**Office européen des brevets**

(11) **EP 0 714 091 B1**

(12) **FASCICULE DE BREVET EUROPEEN**

(45) Date de publication et mention
de la délivrance du brevet:
**16.08.2000 Bulletin 2000/33**

(51) Int Cl.⁷: **G11B 5/49**, G11B 15/12

(21) Numéro de dépôt: **95402616.7**

(22) Date de dépôt: **21.11.1995**

(54) **Dispositif et système de lecture**

Lesevorrichtung und -system

Reading device and system

(84) Etats contractants désignés:
**DE FR GB IT NL**

(30) Priorité: **25.11.1994 FR 9414147**

(43) Date de publication de la demande:
**29.05.1996 Bulletin 1996/22**

(73) Titulaire: **THOMSON-CSF**
**75008 Paris (FR)**

(72) Inventeurs:
• **Audoin, Michel, Thomson-CSF**
**F-92402 Courbevoie Cedex (FR)**
• **Moreau, Bertrand, Thomson-CSF**
**F-92402 Courbevoie Cedex (FR)**
• **Colineau, Joseph, Thomson-CSF**
**F-92402 Courbevoie Cedex (FR)**

(56) Documents cités:
**EP-A- 0 400 678** **WO-A-94/15334**
**WO-A-94/15335**

• **PATENT ABSTRACTS OF JAPAN vol. 15 no. 245 (P-1218) ,24 Juin 1991 & JP-A-03 077082 (MITSUBISHI ELECTRIC CORP.) 2 Avril 1991,**
• **DATABASE WPI Section EI, Week 9208 Derwent Publications Ltd., London, GB; Class W02, AN 92-064560 & US-A-5 086 423 (US. SEC. OF NAVY) , 4 Février 1992**
• **PATENT ABSTRACTS OF JAPAN vol. 10 no. 65 (E-388) ,14 Mars 1986 & JP-A-60 216666 (SHARP K.K.) 30 Octobre 1985,**

## Description

L'invention concerne un dispositif et un système de lecture.

L'invention s'applique notamment à la lecture d'enregistrements magnétiques ou optiques et, dans ce cadre, à la lecture d'enregistrement dans les systèmes d'enregistrements tels que les périphériques informatiques et tous systèmes professionnels.

Elle peut être étendue aux enregistrements sur bande optique et sur disque magnétique ou optique, dès lors que l'on veut y lire plusieurs informations adjacentes en parallèle.

L'enregistrement haute densité d'informations en parallèle engendre généralement en plus des distorsions éventuelles sur chacune des informations, des perturbations (ou diaphonies) lorsque les informations sont très proches les unes des autres. Une correction de diaphonie est alors nécessaire pour optimiser les performances du système.

La demande de Brevet français n° 92 15474 (WO-A-94/15335) décrit une correction de diaphonie dans un système de lecture d'enregistrements multi-pistes (Selon le préambule de la revendication 1). L'enregistrement haute densité sur des pistes parallèles pose un double problème à la relecture de suivi et de séparation des pistes. La faible largeur des pistes (inférieure à 20µm) fait qu'il est difficile sur un lecteur à bande d'assurer la précision du suivi de piste sur la base du seul guidage mécanique du bord de bande. La nécessité de garantir l'intéropérabilité des bandes et des lecteurs vient aggraver cette difficulté.

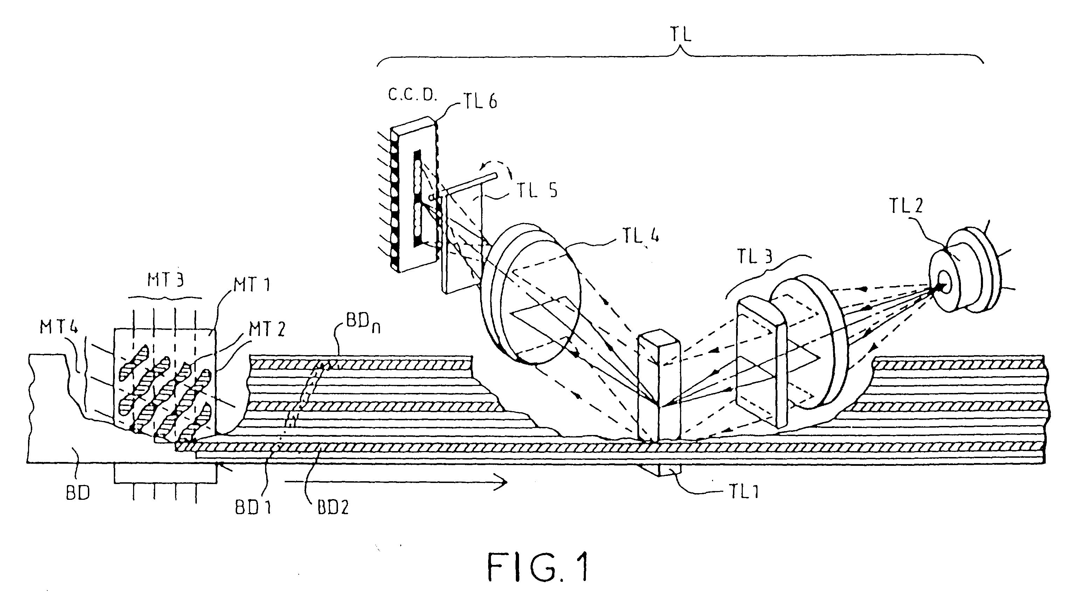

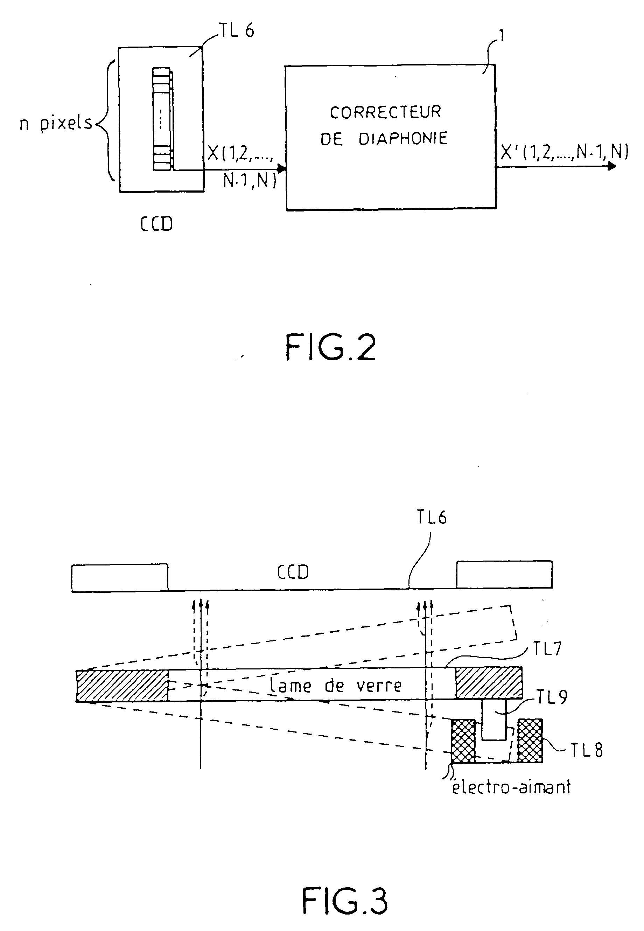

En se reportant à la figure 1, on voit que dans un tel système plusieurs pistes BD1-BDn sont relues simultanément grâce à un système magnéto-optique TL utilisant un capteur CCD linéaire TL6. Les diaphonies issues des premières pistes voisines de chaque piste sont calculées en temps réel. La figure 2 montre que les N informations sur les pistes BD1-BDn sont lues par le CCD TL6 et reçues par un correcteur de diaphonie 1. Comme le train d'échantillons série X correspond à des pistes consécutives BD1-BDn, il est ordonné suivant la séquence 1, 2, ..., N-1, N, 1, 2, ... dans le cas où N pistes sont analysées. Le correcteur corrige les diaphonies en temps réel en tenant compte des coefficients précédemment calculés, et des valeurs, connues des voisins perturbateurs et transmet un train d'échantillons corrigés X'. Ce système permet donc d'annuler les diaphonies issues des premiers voisins.

Pourtant dans un tel système d'enregistrement le capteur CCD linéaire fixe, par ses caractéristiques de transfert optique-électronique, les performances électriques globales et notamment le débit du dispositif. Pour obtenir des débits d'informations plus élevés, il faut donc augmenter la cadence de balayage du CCD.

L'objet de l'invention est d'accroître le débit du système et donc d'augmenter la vitesse de traitement.

Pour cela on réduit la longueur de la trame d'échantillons, ça veut dire le temps entre la lecture de la même piste. Cela est réalisable en réduisant le nombre de photo détecteurs associés à chaque sortie. Par exemple, pour doubler la cadence échantillon, les pixels sont classés en deux groupes suivant la parité de leur rang. On obtient alors, en sortie d'un CCD de N pixels, deux trames simultanées constituées de N/2 échantillons correspondant aux N/2 photodiodes de chaque groupe. On utilise donc un capteur CCD à haut débit dont les sorties sont différenciées pour les photodétecteurs de rang pair et impair.

On rappelle que le principe de base de la correction de diaphonie dans la demande de Brevet français n° 92 15474 s'applique pour un seul train d'échantillons série correspondants à des pistes consécutives et donc ordonnés suivant la séquence 1, 2, ..., N-1, N, 1, 2, ... dans le cas où N pistes sont analysées, alors que les capteurs CCD à haut débit produisent deux trames d'échantillons série ordonnés suivant la séquence 2, 4, ..., N-2, N, 2, 4, ... pour les trains pairs et 1, 3, 5, ..., N-1, 1, 3, ... pour les trains impairs. Donc il se pose un problème d'utilisation des CCD à sorties paire/impaire. On rencontre donc un autre problème qui est de réaliser la correction de diaphonie sur des signaux multi-trains.

Pour traiter ces signaux multi-trains, l'invention utilise un circuit de correction de diaphonie pour chaque train. Chaque circuit est essentiellement le même que celui déjà utilisé dans le système d'une seule trame tel que celui décrit dans la demande de Brevet français n° 92 15474. Pourtant, comme on a besoin, à l'entrée de l'opérateur de correction, de trois échantillons, au moins, correspondant à une piste centrale et à ses deux voisines droite et gauche, il faut disposer des échantillons des pistes voisines qui, eux, appartiennent aux différents trains. Les circuits de correction devront alors assurer la gestion de "bretelles" croisées entre les trains d'échantillons pour disposer d'informations correctes à l'instant approprié.

L'invention concerne donc un dispositif de lecture d'un support d'enregistrement comportant au moins une trame d'informations disposées côte à côte dans plusieurs pistes voisines sur le support d'informations et comportant :

un moyen de lecture lisant en parallèle la trame d'informations et fournissant un train d'échantillons en série correspondant aux informations sur le support d'enregistrement ; et

un circuit de correction de diaphonie corrigeant la diaphonie sur un échantillon central avec l'aide des échantillons voisins dans les pistes voisines ;

caractérisé en ce que :

le moyen de lecture est adapté pour fournir pour une trame d'informations au moins deux trains d'échantillons série destinés à être combinés de façon alternée ; et

en ce qu'il comporte :

un circuit de correction de diaphonie pour chaque train d'échantillons, chaque circuit recevant les échantillons à corriger d'un premier train d'échantillons et des échantillons d'au moins un deuxième train d'échantillons qui constituent les échantillons voisins des échantillons à corriger.

Les différents objets et caractéristiques de l'invention apparaîtront plus clairement dans la description qui va suivre et dans les figures annexées qui représentent:

- la figure 1, un système d'enregistrement-lecture de bande magnétique dans lequel la lecture se fait avec un système magnétooptique ;
- la figure 2, un correcteur de diaphonie dans le système de l'art antérieur ;
- la figure 3, un système de suivi de piste ;
- la figure 4, un exemple de l'organisation des informations et des pistes sur une bande magnétique ;
- la figure 5, un exemple de l'organisation des informations à la sortie du capteur CCD ;
- la figure 6, un exemple de réalisation du système de l'invention ;
- les figures 7a et 7b, un exemple de réalisation du circuit de correction pair et impair ;
- la figure 8, un exemple de réalisation de l'opérateur de correction ;
- la figure 9, le séquencement des données et des calculs dans l'opérateur de correction ;
- les figures 10a à 10c, une variante de réalisation du circuit de correction
- la figure 11, le séquencement des données et des calculs dans l'opérateur d'estimation ;
- la figure 12, un circuit d'élaboration du signal de suivi de piste.

En se reportant à la figure 1, on va tout d'abord décrire un système d'enregistrement lecture auquel est applicable l'invention.

Ce système comporte un support d'enregistrement tel qu'une bande magnétique BD. Une tête d'enregistrement matricielle MT1 comporte une matrice de têtes élémentaires MT1 commandée par des conducteus de sélection de lignes MT3 et des conducteurs de sélection de données MT4. Cette tête permet d'enregistrer sur la bande BD différentes pistes d'informations BD1, BD2, ... BDn correspondant chacune à une tête élémentaire de la tête matricielle MT1. Cette tête d'enregistrement est telle par exemple que celle de la Demande de Brevet français n° 88 05592 (FR-A-2 630 853).

Sur la partie droite de la figure, on a représenté une tête de lecture magnétooptique TL telle que celle de la Demande de Brevet français n° 89 17313 (FR-A-2 656 732).

Cette tête TL comporte un transducteur magnétooptique TL1 (à effet Kerr par exemple) disposé parallèlement au plan de la bande magnétique et dont la grande longueur est transverse à la longueur de la bande. Une source lumineuse TL2 éclaire, par un faisceau de lumière polarisée et à travers un système de focalisation TL3, le transducteur TL1 de telle façon que le faisceau lumineux soit focalisé sensiblement selon une ligne sur une face du transducteur TL1 à proximité de la bande magnétique BD. Le faisceau réfléchi par le transducteur TL1 voit sa polarisation modifiée en fonction du champ magnétique sur la bande. Le faisceau réfléchi est transmi par un système de focalisation TL4 et un système de suivi de piste TL5 à un détecteur optoélectronique TL6 comportant par exemple un dispositif à transfert de charge CCD.

Le détecteur TL6 comporte au moins autant d'éléments détecteurs qu'il y a de pistes sur la bande.

Le transducteur TL1 réfléchit vers le détecteur TL6 un faisceau constitué en réalité d'un ensemble de faisceaux de lecture de pistes chacun ayant eu sa polarisation influencée par une piste de la bande magnétique. L'ensemble de ces faisceaux de lecture est reçu par le détecteur TL6 qui permet ainsi de détecter les informations lues sur chaque piste de la bande BD.

Le transducteur magnétooptique n'est pas gravé et offre une structure de lecture continue, ce qui peut contribuer à la diaphonie de lecture. Il reste fixe et c'est le système de suivi de piste TL5 qui permet, en défléchissant le faisceau, d'assurer le suivi de piste dynamique.

On pourrait aussi envisager un déplacement mécanique direct du CCD le long de son axe.

Le système optique peut être conçu de façon à ce que chaque piste lue soit analysée par une et une seule photodiode.

A noter qu'il est avantageux de ne pas déplacer l'élément mécanique en contact avec la bande (le transducteur).

Le système de suivi de piste TL5 peut être réalisé comme cela est représenté en figure 3. Il comporte une lame de verre à face parallèle TL7 disposée sensiblement parallèlement au détecteur TL6 et tournant autour d'un axe perpendiculaire à la plus grande longueur du transducteur TL1. La rotation est contrôlée par un électro-aimant TL8 et un noyau plongueur TL9 solidaire de la lame TL7. L'électro-aimant reçoit des informations électriques de suivi de piste et permet d'orienter la lame de façon à dévier convenablement le faisceau provenant du transducteur TL1 vers le détecteur TL6 et à affecter à chaque photodiode du détecteur TL6 un faisceau de lecture de piste transmis par le transducteur TL1.

La commande de la lame TL7 peut également être assurée par tout dispositif tel qu'un dispositif piézoélectrique.

Le suivi de piste pourrait également être assuré en déplaçant les uns par rapport aux autres le détecteur TL6, l'optique TL4, le transducteur TL1.

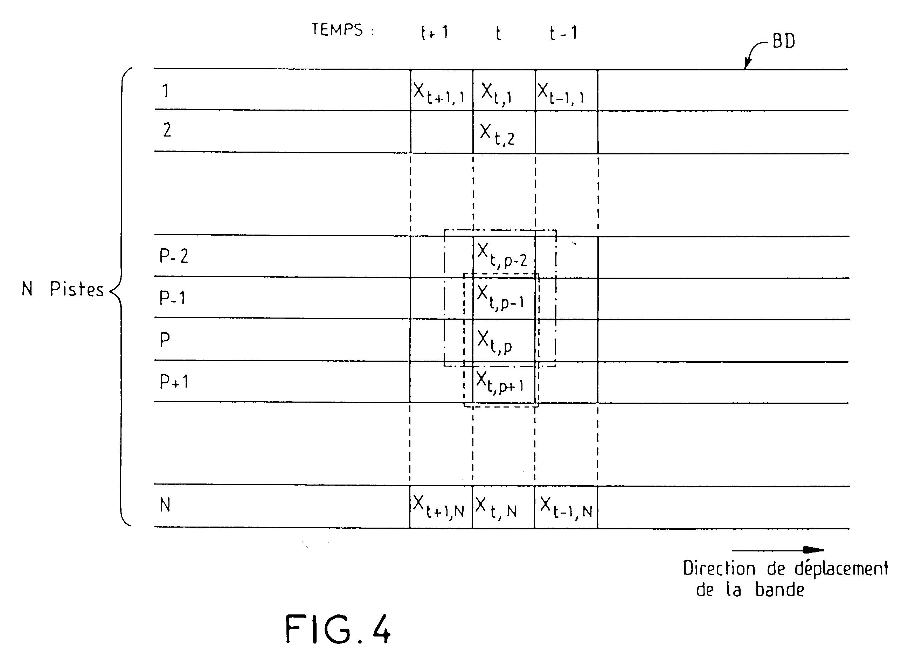

En se reportant à la figure 4, on va maintenant décrire un exemple d'une disposition des informations et des pistes sur la bande magnétique BD en figure 1. A l'instant du temps t, le capteur lit les échantillons d'informations Xt, 1, Xt,2, ..., Xt,p-1, Xt,p, Xt,p+1, ..., Xt,N. Selon cet exemple simplifié, on supposera que ces échantillons d'informations qui correspondent à une trame de pixels d'entrée avaient été enregistrés en parallèle par la tête d'enregistrement MT1. Pourtant les pixels provenant d'une trame d'entrée peuvent être enregistrés d'une façon décalée et peuvent, à la lecture, être suréchantillonnés de telle façon que l'informations dans la trame lue à l'instant t ne corresponde pas à l'information de la trame d'entrée. Ceci ne change pas le principe de l'invention.

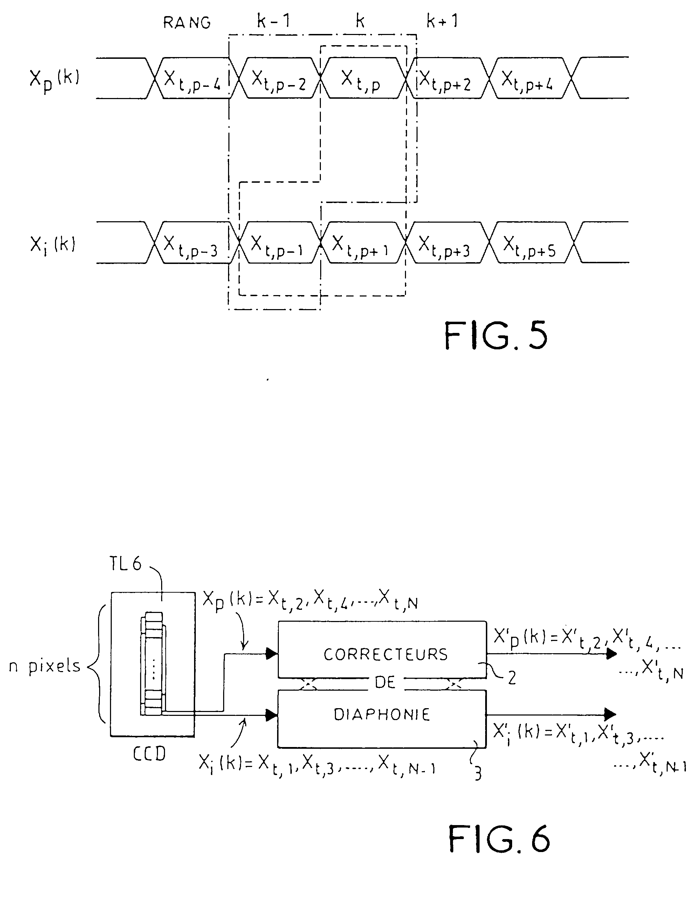

De plus, on supposera que, pour la trame à l'instant t, le capteur CCD à haut débit TL6 lit les N pistes et produit un train d'échantillons série pair Xp(k) et un train d'échantillons série impair Xi(k) séquencés de la manière montrée dans la figure 5. Cela signifie qu'à l'instant k, qu'on appellera le rang k, l'échantillon Xt,p et l'échantillon Xt, p+1 sont disponibles à la sortie du capteur dans les trains pair et impair respectivement.

En se reportant à la figure 6, on va maintenant décrire un système simplifié de correction de diaphonie selon l'invention. Pour traiter ce double flux, l'invention utilise un circuit de correction de diaphonie 2 pour le train pair et un circuit de diaphonie 3 pour le train impair. Chaque circuit est essentiellement le même que celui déjà développé pour le système d'un seul train.

Pourtant, comme on a besoin, à l'entrée de l'opérateur de correction, de trois échantillons, au moins, correspondant à une piste centrale et à ses deux voisines droite et gauche, il faut disposer des échantillons des pistes voisines qui, eux, appartiennent à un train différent de celui de l'échantillon de la piste centrale. Les circuits de correction devront alors assurer la gestion de "bretelles" croisées entre les trains d'échantillons pour disposer d'informations correctes à l'instant approprié.

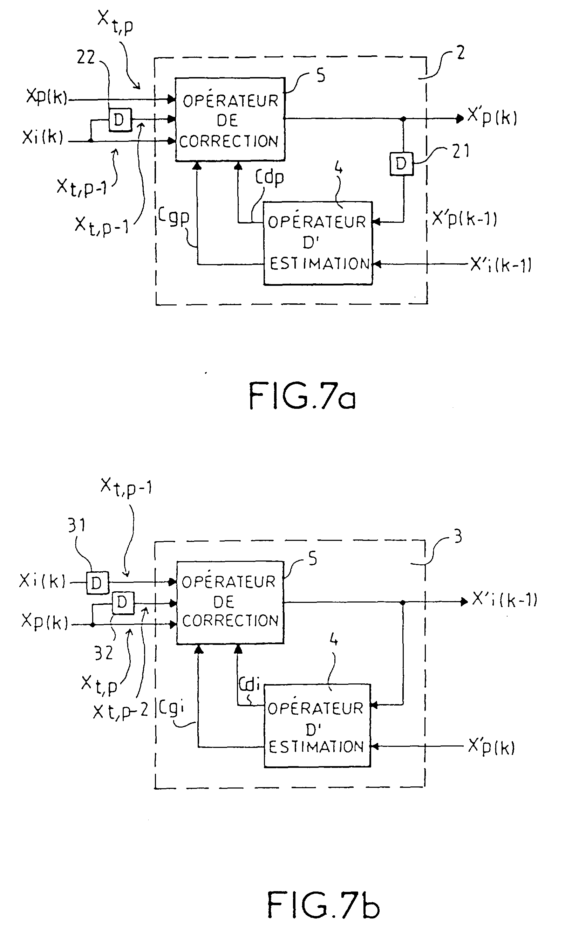

La structure détaillée des nouveaux correcteurs pair 2 et impair 3 apparaît figures 7a et 7b respectivement. La différence entre les deux circuits concernant la position d'un opérateur retard 21 est inhérente à la structure du flux d'entrée dédoublé et à la position relative de chaque échantillon.

On considère d'abord le cas où on corrige l'échantillon Xt,p. On rappelle que, pour connaître la diaphonie que subit une piste on considère les informations provenant des pistes voisines; les échantillons Xt,p-1 et Xt,p+1 dans ce cas. Ces informations sont encadrées par les lignes en pointillés en figure 4. De plus, on voit en figure 5 que l'échantillon Xt,p se trouve dans le train pair Xp(k) au rang k alors que les échantillons Xt,p-1 et Xt,p+1 se trouvent dans le train impair Xi(k) aux rangs k-1 et k respectivement. Ces informations sont indiquées par les lignes en pointillés en figure 5. La correction de diaphonie a lieu dans le circuit de correction pair de la figure 7a qui doit disposer également du train impair Xi(k). L'opérateur retard 22 fournit, au rang k, l'échantillon Xt,p-1 appartient au rang précédent k-1. De cette façon, pour les signaux d'entrée Xp(k) et Xi(k) au rang k, l'entrée d'opérateur de correction 5 dispose des échantillons Xt,p-1, Xt,p et Xt,p+1 qui sont nécessaires à corriger le diaphonie sur l'échantillon Xt,p au rang k.

De même, afin de corriger l'échantillon Xt,p-1, qui se trouve dans le train impair Xi(k) au rang k-1, il faut disposer des échantillons Xt,p-2 et Xt,p qui se trouvent dans le train pair Xp(k) aux rangs k-1 et k respectivement. Ces informations sont indiquées par les lignes en traits mixtes en figure 4 et 5. La correction de diaphonie a lieu dans le circuit de correction impair de la figure 7b qui doit disposer également du train pair Xp(k). Les opérateurs retards 31 et 32 fournissent, au rang k, les échantillons Xt,p-1 et Xt,p-2 respectivement qui appartiennent au rang précédent k-1. De cette façon, pour les signaux d'entrée Xp(k), Xi(k) au rang k, l'entrée d'opérateur de correction 5 dispose des échantillons Xt,p-2, Xt,p-1 et Xt,p qui sont nécessaires à corriger la diaphonie sur l'échantillon Xt,p-1 au rang k-1. Le circuit de correction impair 3 opère donc un rang en arrière par rapport au circuit de correction pair 2.

L'opération des opérateurs de correction 5 et d'estimation 4 est fondée sur le brevet cité ci-dessus. En particulier, l'opérateur de correction de diaphonie 5 reçoit les coefficients de diaphonie Cg et Cd et effectue la correction de diaphonie du signal Xp(k) ou Xi(k) en faisant l'opération suivante

$$X'p(k) = Xp(k) - (Cdp.Xi(k) + Cgp.Xi(k-1)) \text{ pour le circuit pair}$$

$$X'i(k) = Xi(k) - (Cdi.Xp(k+1) + Cgi.Xp(k)) \text{ pour le circuit impair}$$

Cdp, Cgp, Cdi, et Cgi sont les coefficients de diaphonie calculées par l'opérateur d'estimation 4 qui représentent la diaphonie qui peut exister sur l'échantillons de la piste paire (p) ou impaire (i) due aux échantillons situés sur une piste à sa droite (d) ou gauche (g) sur la bande en l'observant dans la direction de son déplacement.

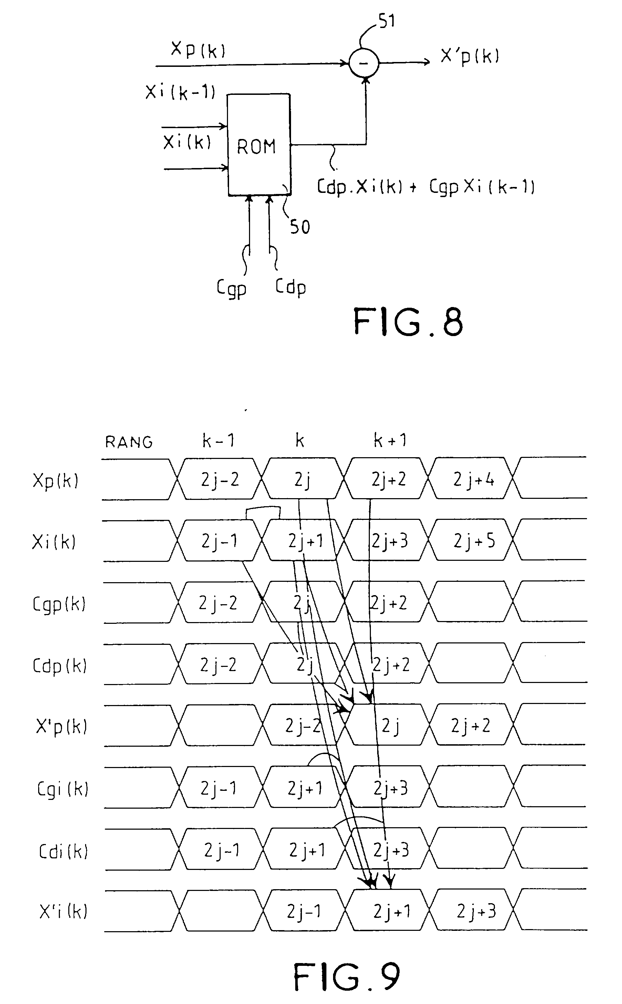

La figure 8 représente un exemple de réalisation de l'opérateur de correction 5 pour le circuit de correction pair 2 (celui du circuit impair n'en diffère que dans les indices). Ce circuit comporte un circuit 50 de type ROM qui reçoit les coefficients de diaphonie Cgp et Cdp ainsi que les signaux Xi(k-1) et Xi(k), et fournit en sortie la valeur de l'expression Cdp.Xi(k) + Cgp.Xi(k-1). Ce résultat est transmis au circuit de soustraction 51 qui effectue la différence entre ce résultat et la valeur du signal Xp(k). On obtient ainsi le signal corrigé en diaphonie X'p(k). La figure 9 présente le séquencement des données et des calculs dans ces opérateurs.

L'opérateur d'estimation de diaphonie 4 est connecté en sortie du circuit de correction de diaphonie 5 (figures 7a et 7b) et il estime les coefficients de diaphonie décrits ci-dessus. L'estimation de la valeur instantanée de diaphonie gauche Cgp ou Cgi se fait en effectuant le produit de la valeur d'un échantillon par le signe de l'échantillon situé à sa gauche. De même l'estimation de la valeur de diaphonie droite Cdp ou Cdi se fait en multipliant la valeur d'un échantillon par le signe de l'échantillon situé à sa droite. Ainsi, on obtient:

$$Edp = X'p(k-1) * Sgn[X'i(k-1)]$$

et

$$Egp = X'p(k-1) * Sgn[X'i(k-2)] \text{ pour le train pair,}$$

et

$$Edi = X'i(k-1) * Sgn[X'p(k)]$$

et

$$Egi = X'i(k-1) * Sgn[X'p(k-1)] \text{ pour le train impair.}$$

L'opérateur retard 21 est nécessaire pour assurer que l'opérateur d'estimation 4 dans le circuit de correction pair 2 opère au rang K-1 afin d'utiliser l'information du circuit de correction impair qui opère à ce rang. L'opérateur d'estimation 4 peut être réalisé avec un circuit de type ROM.

En fait, comme l'opérateur d'estimation de diaphonie 4 est connecté en sortie de l'opérateur de correction de diaphonie 5, l'opérateur d'estimation de diaphonie effectue une estimation de diaphonie résiduelle d'un signal supposé déjà corrigé en diaphonie. Cela veut dire que les valeurs de diaphonie calculées ci-dessus sont des valeurs de diaphonie résiduelles.

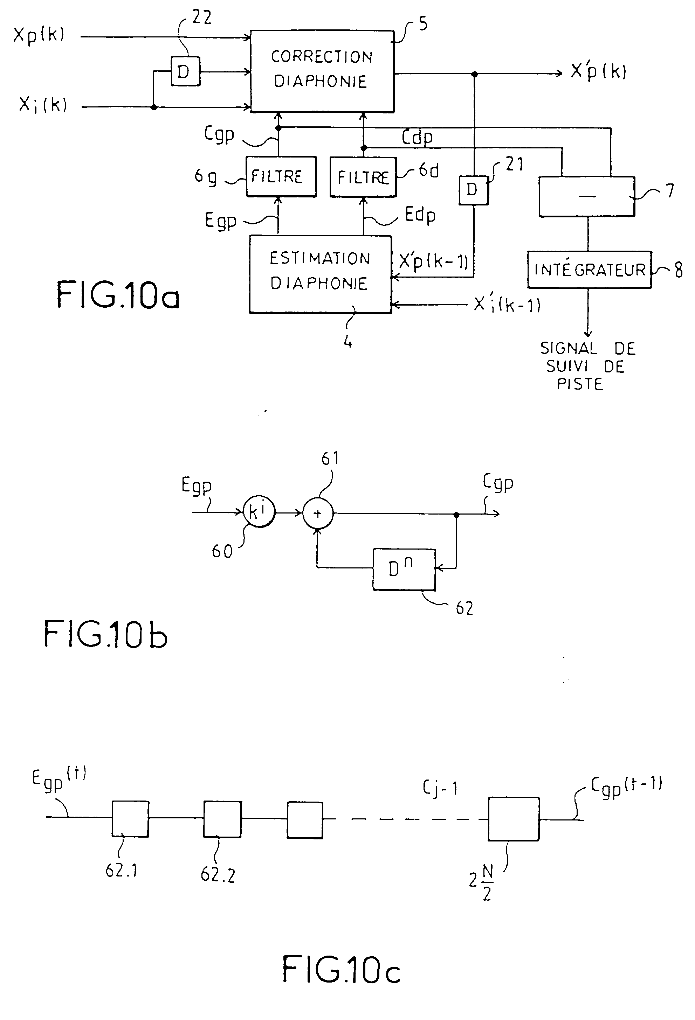

La figure 10a représente une variante préférentielle de réalisation du correcteur de diaphonie 2 ou 3 selon l'invention. Dans ce circuit, qui s'applique au correcteur de diaphonie pair 2 (celui du circuit impair n'en diffère que dans les indices), les coefficients de diaphonie résiduelles sont transmis à des filtres intégrateurs 6g et 6d. Ces filtres intègrent continuellement les coefficients de diaphonie. L'opération réalisée par les filtres intégrateurs est la suivante

$$Cgp(t) = Cgp(t-1) + E'egp$$

et

$$Cdp(t) = Cdp(t-1) + E'edp$$

c'est-à-dire que, dans la trame à l'instant t, la nouvelle valeur estimée du coefficient de diaphonie Cgp ou Cdp est égale à la valeur dans la trame à l'instant t-1 corrigé d'une fraction k' de l'erreur résiduelle egp ou edp. Ici les coefficients de diaphonie de la réalisation précédente ont été renommées erreurs résiduelles dans la réalisation actuelle.

La figure 10b représente un exemple de réalisation de ces filtres. Un circuit 60 pondère à l'aide d'un coefficient k' (inférieur à 1) le coefficient de diaphonie résiduelle egp. Le coefficient pondéré est transmis à une entrée d'un circuit d'addition 61 dont la sortie est rebouclée sur une autre entrée par un circuit mémoire 62. Ce circuit mémoire 62 est constitué, par exemple, comme celui représenté en figure 10c. On voit donc que le coefficient de diaphonie résiduelle egp, pondéré par le coefficient k' est additionné à la valeur du coefficient de diaphonie calculé précédemment pour la même piste.

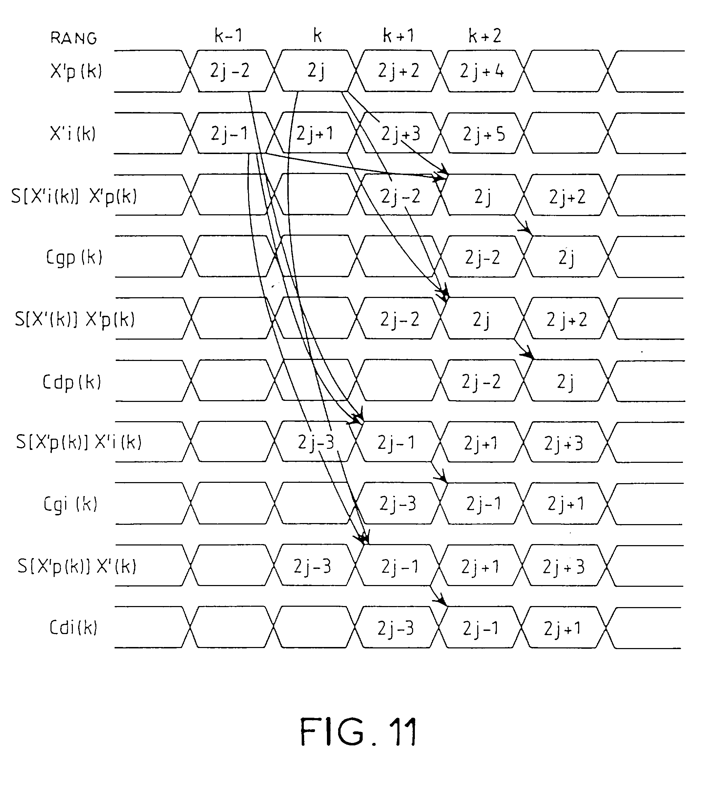

Après filtrage de cette erreur instantanée, les coefficients sont disponibles après une étape de mémorisation nécessaire pour les mettre en phase pour un nouveau calcul de correction. C'est à cause du fait que la diaphonie ne change pas entre des différents échantillons ou ne change que très peu, qu'on peut corriger les échantillons en utilisant les coefficients calculées de l'information d'un autre temps. La figure 11 présente le séquencement des données et des calculs dans ces opérateurs.

Par ailleurs, le circuit de figure 10a permet également de calculer un signal de suivi de piste pour commander le dispositif de suivi de piste TL5 décrit précédemment ou les positions respectives du détecteur TL6, de l'optique TM4 et du transducteur TL1. Cela est réalisé à l'aide d'un circuit de soustraction 7 connecté aux sorties des filtres 6g et 6d, et qui effectue la différence entre les coefficients de diaphonie. Pour éviter que toute variation brutale des coefficients de diaphonie ait un effet immédiat sur le dispositif de suivi de piste, la différence Cgp-Cgd est intégrée sur les n pistes que possède le support d'enregistrement. On obtient un signal de suivi de piste qui peut être moyenné sur l'ensemble des pistes pour donner un résultat insensible aux phénomènes affectant une piste particulière.

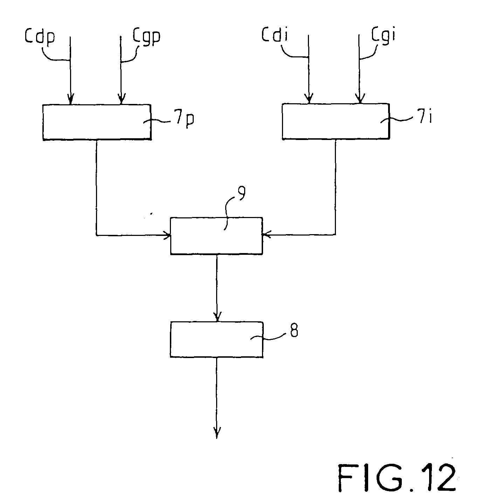

Plus précisément, puisque le système de l'invention calcule les coefficients de diaphonie pairs et impairs (Cgp, Cdp, Cgi, Cdi), il convient de réaliser l'intégration sur l'ensemble de ces coefficients. C'est pourquoi, comme représenté en figure 12, on prévoit deux circuits de soustraction 7i et 7p qui effectuent respectivement les différences Cgi - Cdi et Cgp - Cdp. Un lecteur multiplexeur 9 lit alternativement les sorties des circuits de soustraction 7i et 7p et transmet à l'intégrateur 8 alternativement les différences Cgi - Cdi et Cgp - Cdp. Le signal de suivi de piste est donc obtenu à partir d'une valeur moyenne basée sur les coefficients de diaphonie pairs et impairs.

L'invention a été décrite en application à la lecture d'une bande magnétique, mais elle est applicable à la lecture de tout support d'informations (bande, disque, carte, ...) lisible par tous moyens (moyens magnétiques magnéto-résistifs, moyens optiques, ...). De plus, dans la description qui précède, les informations à lire sont organisées sous forme de pistes, mais l'invention est également applicable à la lecture d'informations organisées sous forme de trames indépendantes voire même d'une trame unique.

**Revendications**

1. Dispositif de lecture d'un support d'enregistrement (BD) comportant au moins une trame d'informations (Xt,1, Xt, 2, ..., Xt,N) disposées côte à côte dans plusieurs pistes voisines sur le support d'enregistrement, et comportant :

   un moyen de lecture (TL6) lisant en parallèle la trame d'informations et fournissant un train d'échantillons en série correspondant aux informations sur le support d'enregistrement ; et
   un circuit de correction de diaphonie (1) corrigeant la diaphonie sur un échantillon central (Xt,p) avec l'aide des échantillons voisins (Xt,p-1,Xt,p+1) dans les pistes voisines ;

   caractérisé en ce que :
   le moyen de lecture (TL6) est adapté pour fournir pour une trame d'informations au moins deux trains d'échantillons série (Xi(k),Xp(k)) destinés à être combinés de façon alternée ; et
   en ce qu'il comporte :
   un circuit de correction de diaphonie (2,3) pour chaque train d'échantillons, chaque circuit recevant les échantillons à corriger (Xt,p ou Xt,p-1) d'un premier train d'échantillons (Xp(k) ou Xi(k)) et des échantillons (Xt,p-1,Xt, p+1 ou Xt,p-2,Xt,p) d'au moins un deuxième train d'échantillons (Xi(k) ou Xp(k)), qui constituent les échantillons voisins des échantillons à corriger.

2. Dispositif selon la revendication 1, caractérisé en ce que chaque circuit de correction de diaphonie (2,3) comporte :

   un opérateur de correction de diaphonie (5) recevant les échantillons à corriger (Xt,p ou Xt,p-1) du premier train d'échantillons (Xp(k) ou Xi(k)) et des échantillons (Xt,p-1,Xt,p+1 ou Xt,p-2,Xt,p) du deuxième train d'échantillons (Xi(k) ou Xp(k)) et les coefficients de diaphonie (Cgp,Cdp ou Cgi,Cdi), qui représentent la diaphonie qui peut exister des échantillons voisins (Xt,p-1, Xt,p+1 ou Xt,p-2, Xt,p) sur l'échantillon central (Xt, p ou Xt,p-1) calculant un signal corrigé en diaphonie (X'p(k) ou X'i(k)) ; et
   un opérateur d'estimation de diaphonie (4) connecté en sortie de l'opérateur de correction de diaphonie (5) calculant les coefficients de diaphonie (Cg,Cd).

3. Dispositif selon la revendication 2, caractérisé en ce que l'opérateur d'estimation (4) comporte :

des moyens calculant le produit de la valeur d'un coefficient de diaphonie gauche (Cgp,Cgi) en effectuant le produit de la valeur d'un échantillon par le signe de l'échantillon à sa gauche ; et
des moyens calculant le produit de la valeur d'un coefficient de diaphonie droite (Cdp,Cdi) en multipliant la valeur d'un échantillon par le signe de l'échantillon à sa droite.

4. Dispositif selon l'une des revendications 1 à 3, caractérisé en ce que le moyen de lecture (TL6) est adapté pour fournir un train d'échantillons série pair (Xp(k)) et un train d'échantillons série impair (Xi(k)) dont les échantillons correspondent à des informations alternées sur le support d'enregistrement.

5. Dispositif selon la revendication 4, caractérisé en ce que l'opérateur de correction de diaphonie (5) comprend :
des moyens (50,51) effectuant la correction de diaphonie des trains d'échantillons (Xp(k) ou Xi(k)) en faisant les opérations suivantes :

$$X'p(k) = Xp(k) - (Cdp.Xi(k) + Cgp.Xi(k-1)) \text{ pour le circuit pair}$$

$$X'i(k) = Xi(k) - (Cdi.Xp(k+1) + Cgi.Xp(k)) \text{ pour le circuit impair,}$$

où
Xp(k) et Xi(k) sont les trains d'échantillons pairs et impairs à corriger en diaphonie,

Cdp, Cgp, Cdi, et Cgi sont les coefficients de diaphonie calculées par l'opérateur d'estimation 4 qui représentent la diaphonie qui peut exister sur un échantillon du train pair (p) ou impair (i) due aux échantillons situés sur sa droite (d) ou gauche (g) sur le support d'enregistrement et
X'p(k) et X'i(k) sont les trains d'échantillons pairs et impairs corrigés en diaphonie.

6. Dispositif selon les revendications 4 ou 5, caractérisé en ce que l'opérateur d'estimation (4) comporte :
des moyens calculant les valeurs des diaphonies en faisant les opération suivantes :

$$Edp = X'p(k-1) * Sgn[X'i(k-1)]$$

et

$$Egp = X'p(k-1) * Sgn[X'i(k-2)] \text{ pour le train pair,}$$

et

$$Edi = X'i(k-1) * Sgn[X'p(k)]$$

et

$$Egi = X'i(k-1) * Sgn[X'p(k-1)] \text{ pour le train impair,}$$

où
X'p(k) et X'i(k) sont les trains d'échantillons pairs et impairs corrigés en diaphonie.

7. Dispositif selon l'une des revendications 2 à 6, caractérisé en ce que chaque circuit de correction de diaphonie (2,3) comporte entre l'opérateur d'estimation de diaphonie (4) et l'opérateur de correction de diaphonie (5) un circuit de filtrage (6g,6d) par coefficient de diaphonie comprenant :
un circuit de pondération (60) recevant un signal de diaphonie (egp) et le pondérant à l'aide d'un coefficient de pondération k, un circuit d'addition (61) recevant sur une première entrée ce signal pondéré et possédant sa sortie rebouclée sur une deuxième entrée par un circuit en mémoire (62) appliquant sur cette deuxième entrée, un coefficient de diaphonie calculé antérieurement pour un échantillon dans la même position dans la trame précédente.

8. Dispositif selon l'une des revendications 1 à 7, caractérisé en ce que les trames d'informations ($X_{t,1}$, $X_{t,2}$, ... $X_{t,N}$), sur le support d'enregistrement sont disposées de façon que les informations à la même position dans des trames successives ($X_{t-1,p}$, $X_{t,p}$, $X_{t+1,p}$) forment des pistes qui s'étendent dans une direction perpendiculaire aux trames.

9. Dispositif selon la revendication 8, caractérisé en ce qu'il comporte:

un circuit de soustraction (7) connecté au circuit d'estimation de diaphonie (4), recevant les coefficients de diaphonie (Cgp,Cdp ou Cdp,Cdi), en calculant leur différence et fournissant un signal de correction de suivi de piste.

10. Dispositif selon la revendication 9, caractérisé en ce qu'il comporte un premier circuit de soustraction (7p) pour les coefficients de diaphonie pairs, un deuxième circuit de soustraction (7i) pour les coefficients de diaphonie impairs, un lecteur multiplexeur (9) lisant alternativement les sorties des deux circuits de soustraction et fournissant les résultats des différences à un circuit intégrateur (8) qui fournit un signal de suivi de piste.

11. Système de lecture d'un support d'enregistrement (BD) comportant :

un support d'enregistrement (BD) ;
des moyens optiques (TL2) pour transmettre un faisceau optique au support d'enregistrement qui retransmet ce faisceau ;
des moyens (TL4) de détection optique pour recevoir le faisceau retransmis par le support d'enregistrement ;

caractérisé en ce qu'il comporte :
un dispositif de lecture selon les revendications 1-9.

## Patentansprüche

1. Vorrichtung zum Lesen eines Aufzeichnungsträgers (BD) mit mindestens einem Rahmen (Xt,1, Xt,2, ..., Xt,N) von nebeneinander in mehreren einander benachbarten Spuren angeordneten Informationen, die enthält:

- ein Lesemittel (TL6), das parallel den Rahmen von Informationen liest und einen Signalzug von Tastproben in Serie entsprechend den Informationen auf dem Aufzeichnungträger liefert,
- und eine Diaphonie-Korrekturschaltung (1), die die Diaphonie korrigiert, die auf eine zentrale Tastprobe (Xt, p) von benachbarten Tastproben (Xt,p-1, Xt,p+1) in den Nachbarspuren einwirkt,

dadurch gekennzeichnet, daß das Lesemittel (TL6) für einen Rahmen von Informationen mindestens zwei Signalzüge von Tastproben in Serie (Xi(k), Xp(k)) liefern kann, die abwechselnd kombiniert werden sollen, und daß die Vorrichtung weiter je eine Diaphonie-Korrekturschaltung (2, 3) für jeden Signalzug von Tastproben enthält, wobei jede dieser Schaltungen die zu korrigierenden Tastproben (Xt,p oder Xt,p-1) eines ersten Signalzugs (Xp (k) oder Xi(k)) von Tastproben sowie Tastproben (Xt,p-1, Xt,p+1 oder Xt,p-2, Xt,p) mindestens eines zweiten Signalzugs (Xi(k) oder Xp(k)) von Tastproben empfängt, die die der zu korrigierenden Tastprobe benachbarten Tastproben bilden.

2. Vorrichtung nach Anspruch 1, dadurch gekennzeichnet, daß jede Diaphoniekorrekturschaltung (2, 3) aufweist:

- einen Diaphonie-Korrekturoperator (5), der die zu korrigierenden Tastproben (Xt,p oder Xt,p-1) des ersten Signalzugs (Xp(k) oder Xi(k)) sowie Tastproben (Xt,p-1, Xt,p+1 oder Xt,p-2, Xt,p) aus dem zweiten Signalzug (Xi(k) oder Xp(k)) sowie die Diaphoniekoeffizienten (Cgp, Cdp oder Cgi, Cdi) empfängt, die die Diaphonie repräsentieren, die auf die zentrale Tastprobe (Xt,p oder Xt,p-1) von den benachbarten Tastproben (Xt,p-1, Xt,p+1 oder Xt,p-2, Xt,p) einwirken kann, und einen hinsichtlich der Diaphonie korrigierten Signalzug (X'p(k) oder X'i(k)) berechnet,
- und einen Diaphonie-Schätzoperator (4), der an den Ausgang des Diaphonie-Korrekturoperators (5) angeschlossen ist und die Diaphoniekoeffizienten (Cg, Cd) berechnet.

3. Vorrichtung nach Anspruch 2, dadurch gekennzeichnet, daß der Diaphonie-Schätzoperator (4) aufweist:

- Mittel, die das Produkt aus dem Wert eines linken Diaphoniekoeffizienten (Cgp, Cgi) durch Bildung des Produkts zwischen dem Wert einer Tastprobe und dem Vorzeichen der Tastprobe links davon berechnet,

- Mittel, die das Produkt aus dem Wert eines rechten Diaphoniekoeffizienten (Cdp, Cdi) durch Bildung des Produkts zwischen dem Wert einer Tastprobe und dem Vorzeichen der Tastprobe rechts davon berechnet.

4. Vorrichtung nach einem der Ansprüche 1 bis 3, dadurch gekennzeichnet, daß das Lesemittel (TL6) einen Signalzug (Xp(k)) von Tastproben in Serie mit geradzahligem Rang und einen Signalzug (Xi(k)) von Tastproben in Serie mit ungeradzahligem Rang liefern kann, deren Tastproben abwechselnd auf dem Aufzeichnungsträger aufeinanderfolgenden Informationen entsprechen.

5. Vorrichtung nach Anspruch 4, dadurch gekennzeichnet, daß der Diaphonie-Korrekturoperator (5) aufweist:

- Mittel (50, 51), die die Diaphonie der Signalzüge (Xp(k) oder Xi(k)) von Tastproben mithilfe folgender Operationen korrigieren:
für die geradzahlige Schaltung:

$$X'p(k) = Xp(k) - [Cdp \cdot Xi(k) + Cgp \cdot Xi(k-1)]$$

und für die ungeradzahlige Schaltung:

$$X'i(k) = Xi(k) - [Cdi \cdot Xp(k+1) + Cgi \cdot Xp(k)]$$

wobei Xp(k) und Xi(k) die geradzahligen und ungeradzahligen Signalzüge von hinsichtlich der Diaphonie zu korrigierenden Tastproben sind, Cdp, Cgp, Cdi und Cgi die vom Schätzoperator (4) berechneten Koeffizienten für die Diaphonie bedeuten, die auf eine Tastprobe des geradzahligen (p) oder ungeradzahligen Signalzugs (i) von Tastproben kommend einwirken kann, die sich auf dem Aufzeichnungsträger rechts (d) oder links (g) davon befinden, und wobei X'p(k) und X'i(k) die hinsichtlich der Diaphonie korrigierten geradzahligen und ungeradzahligen Signalzüge von Tastproben sind.

6. Vorrichtung nach Anspruch 4 oder 5, dadurch gekennzeichnet, daß der Diaphonie-Schätzoperator (4) Mittel aufweist, die die Werte der Diaphonie aufgrund folgender Operationen berechnen:
für den geradzahligen Signalzug:

$$Edp = X'p(k-1) \cdot Sgn[X'i(k-1)]$$

und

$$Egp = X'p(k-1) \cdot Sgn[X'i(k-2)]$$

sowie für den ungeradzahligen Signalzug:

$$Edi = X'i(k-1) \cdot Sgn[X'p(k)]$$

und

$$Egi = X'i(k-1) \cdot Sgn[X'p(k-1)]$$

wobei X'p(k) und X'i(k) die geradzahligen und ungeradzahligen Signalzüge sind, die hinsichtlich der Diaphonie korrigiert sind.

7. Vorrichtung nach einem der Ansprüche 2 bis 6, dadurch gekennzeichnet, daß jede Diaphonie-Korrekturschaltung (2, 3) zwischen dem Diaphonie-Schätzoperator (4) und dem Diaphonie-Korrekturoperator (5) eine Filterschaltung (6g, 6d) für jeden Diaphoniekoeffizienten enthält, die eine Gewichtungsschaltung (60), welche ein Diaphoniesignal (egp) empfängt und es mit einem Gewichtungskoeffizienten k gewichtet, und eine Addierschaltung (61) aufweist, die auf einem ersten Eingang dieses gewichtete Diaphoniesignal empfängt und deren Ausgang an einen zweiten Eingang über eine Speicherschaltung (62) rückgeschleift ist, die auf diesen zweiten Eingang einen vorher für eine Tastprobe in derselben Lage im vorhergehenden Rahmen berechneten Diaphoniekoeffizienten anlegt.

8. Vorrichtung nach einem der Ansprüche 1 bis 7, dadurch gekennzeichnet, daß die Informationsrahmen ($X_{t,1}$, $X_{t,2}$, ... $X_{t,N}$) auf dem Aufzeichnungsträger so angeordnet sind, daß die Informationen in der gleichen Position in aufeinanderfolgenden Rahmen ($X_{t-1,p}$, $X_{t,p}$ $X_{t+1,p}$) Spuren bilden, die sich in einer Richtung senkrecht zu den Rahmen erstrecken.

9. Vorrichtung nach Anspruch 8, dadurch gekennzeichnet, daß sie eine Subtraktionsschaltung (7) aufweist, die an die Diaphonie-Schätzschaltung (4) angeschlossen ist, die Diaphoniekoeffizienten (Cgp, Cdp, Cgi, Cdi) empfängt, deren Differenz berechnet und ein Spurverfolgungs-Korrektursignal liefertn.

10. Vorrichtung nach Anspruch 9, dadurch gekennzeichnet, daß sie eine erste Subtraktionsschaltung (7p) für die geradzahligen Diaphoniekoeffizienten, eine zweite Subtraktionsschaltung (7i) für die ungeradzahligen Diaphoniekoeffizienten und einen Leser-Multiplexer (9) aufweist, der abwechselnd die Ausgänge der beiden Subtraktionsschaltungen liest und die Differenzen an eine Integrationsschaltung (8) liefert, die ein Spurverfolgungssignal erzeugt.

11. System zum Lesen eines Aufzeichnungsträgers (BD), mit einem Aufzeichnungsträger (BD), mit optischen Mitteln (TL2) zur Übertragung eines Lichtstrahls auf den Aufzeichnungsträger, der diesen Strahl weiterleitet, und mit optischen Erfassungsmitteln (TL4), die den von Aufzeichnungsträger weitergeleiteten Strahl empfangen, dadurch gekennzeichnet, daß es eine Lesevorrichtung nach den Ansprüchen 1 bis 9 enthält.

**Claims**

1. Device for reading a recording medium (BD) comprising at least one frame (Xt,1, Xt,2, ..., Xt,n) of information arranged side by side in several neighbouring tracks on the recording medium, and comprising:

   a reading means (TL6) reading in parallel the information frame and delivering a serial sample train corresponding to the information on the recording medium; and
   a crosstalk correction circuit (1) correcting the crosstalk on a central sample (Xt,e) with the aid of the neighbouring samples (Xt,e-1, Xt,e+1) in the neighbouring tracks;

   characterized in that:
   the reading means (TL6) is adapted to deliver for an information frame at least two serial sample trains (Xo(k), Xe (k)) intended to be combined in an alternating manner; and
   in that it comprises:
   a crosstalk correction circuit (2, 3) for each sample train, each circuit receiving the samples to be corrected (Xt,e or Xt,e-1) of a first sample train (Xe(k) or Xo(k)) and samples (Xt,e-1, Xt,e+1 or Xt,e-2, Xt,e) of at least a second sample train (Xo(k) or Xe(k)), which constitute the neighbouring samples of the samples to be corrected.

2. Device according to Claim 1, characterized in that each crosstalk correction circuit (2, 3) comprises:

   a crosstalk correction operator (5) receiving the samples to be corrected (Xt,e or Xt,e-1) of the first sample train (Xe(k) or Xo(k)) and samples (Xt,e-1, Xt,e+1 or Xt,e-2, Xt,e) of the second sample train (Xo(k) or Xe(k)) and the crosstalk coefficients (Cle, Cre or Clo, Cro), which represent the crosstalk which may exist for the neighbouring samples (Xt,e-1, Xt,e+1 or Xt,e-2, Xt,e) on the central sample (Xt,e or Xt,e-1) calculating a crosstalk-corrected signal (X'e(k) or X'o(k)); and
   a crosstalk estimation operator (4) connected at the output of the crosstalk correction operator (5) calculating the crosstalk coefficients (Cl, Cr).

3. Device according to Claim 2, characterized in that the estimation operator (4) comprises:

   means calculating the product of the value of a left crosstalk coefficient (Cle, Clo) by performing the product of the value of a sample times the sign of the sample to its left; and

means calculating the product of the value of a right crosstalk coefficient (Cre, Cro) by multiplying the value of a sample by the sign of the sample to its right.

4. Device according to one of Claims 1 to 3, characterized in that the reading means (TL6) is adapted to deliver an even serial sample train (Xe(k)) and an odd serial sample train (Xo(k)) whose samples correspond to information alternating on the recording medium.

5. Device according to Claim 4, characterized in that the crosstalk correction operator (5) comprises: means (50, 51) performing the crosstalk correction of the sample trains (Xe(k) or Xo(k)) by carrying out the following operations:

$$X'e(k) = Xe(k) - (Cre.Xo(k) + Cle.Xo(k-1))$$

for the even circuit

$$X'o(k) = Xo(k) - (Cro.Xe(k+1) + Clo.Xe(k))$$

for the odd circuit, where Xe(k) and Xo(k) are the even and odd sample trains to be crosstalk-corrected,

Cre, Cle, Cro and Clo are the crosstalk coefficients calculated by the estimation operator 4 which represent the crosstalk which may exist on a sample of the even (e) or odd (o) train due to the samples situated on its right (r) or left (l) on the recording medium and
X'e(k) and X'o(k) are the even and odd crosstalk-corrected sample trains.

6. Device according to Claim 4 or 5, characterized in that the estimation operator (4) comprises:
means calculating the values of the crosstalks by carrying out the following operations:

$$Ere = X'e(k-1) * Sgn[X'o(k-1)]$$

and

$$Ele = X'e(k-1) * Sgn[X'o(k-2)] \text{ for the even train,}$$

and

$$Ero = X'o(k-1) * Sgn[X'e(k)]$$

and

$$Elo = X'o(k-1) * Sgn[X'e(k-1)]$$

for the odd train, where X'e(k) and X'o(k) are the crosstalk-corrected even and odd sample trains.

7. Device according to one of Claims 2 to 6, characterized in that each crosstalk correction circuit (2, 3) comprises between the crosstalk estimation operator (4) and the crosstalk correction operator (5) a filtering circuit (61, 6r) per crosstalk coefficient, comprising:
a weighting circuit (60) receiving a crosstalk signal (ele) and weighting it with the aid of a weighting coefficient k, an addition circuit (61) receiving this weighted signal on a first input and possessing its output looped back onto a second input via a memory circuit (62) applying to this second input a crosstalk coefficient calculated previously for a sample in the same position in the previous frame.

8. Device according to one of Claims 1 to 7, characterized in that the information frames $(X_{t,1}, X_{t,2}, ... X_{t,N})$ on the recording medium are arranged in such a way that the information at the same position in successive frames $(X_{t-1,e},$

$X_{t,e}$, $X_{t+1,e}$) form tracks which run in a direction perpendicular to the frames.

9. Device according to Claim 8, characterized in that it comprises:
a subtraction circuit (7) connected to the crosstalk estimation circuit (4), receiving the crosstalk coefficients (Cle, Cre or Cre, Cro), calculating the difference thereof and delivering a tracking correction signal.

10. Device according to Claim 9, characterized in that it comprises a first subtraction circuit (7e) for the even crosstalk coefficients, a second subtraction circuit (70) for the odd crosstalk coefficients, a multiplexer reader (9) alternately reading the outputs of the two subtraction circuits and delivering the results of the differences to an integrator circuit (8) which delivers a tracking signal.

11. System for reading a recording medium (BD), comprising;

a recording medium (BD);
optical means (TL2) for transmitting an optical beam to the recording medium which retransmits this beam;
means of optical detection (TL4) for receiving the beam retransmitted by the recording medium;

characterized in that it comprises:
a reading device according to Claims 1 - 9.

FIG.1

## FIG.2

## FIG.3

EP 0 714 091 B1

TEMPS :  t+1    t    t-1

FIG. 4

$X_p(k)$    RANG    $k-1$    $k$    $k+1$

$X_p(k)$: $X_{t,p-4}$   $X_{t,p-2}$   $X_{t,p}$   $X_{t,p+2}$   $X_{t,p+4}$

$X_i(k)$: $X_{t,p-3}$   $X_{t,p-1}$   $X_{t,p+1}$   $X_{t,p+3}$   $X_{t,p+5}$

## FIG.5

TL 6

$X_p(k) = X_{t,2}, X_{t,4}, \ldots, X_{t,N}$

n pixels

CCD

$X_i(k) = X_{t,1}, X_{t,3}, \ldots, X_{t,N-1}$

CORRECTEURS DE DIAPHONIE

$X'_p(k) = X'_{t,2}, X'_{t,4}, \ldots, \ldots, X'_{t,N}$

$X'_i(k) = X'_{t,1}, X'_{t,3}, \ldots, \ldots, X'_{t,N-1}$

2

3

## FIG.6

FIG.7a

FIG.7b

FIG.8

FIG.9

$X_p(k)$

22

$X_i(k)$

D

CORRECTION DIAPHONIE — 5

$X'_p(k)$

$C_{gp}$

$C_{dp}$

6 g FILTRE     FILTRE — 6 d

D — 21

− — 7

$E_{gp}$     $E_{dp}$

ESTIMATION DIAPHONIE

$X'_p(k-1)$

INTÉGRATEUR — 8

**FIG.10a**

$X'_i(k-1)$

4

SIGNAL DE
SUIVI DE
PISTE

$E_{gp}$

61

$C_{gp}$

$k^i$

+

60

$D^n$

62

**FIG.10b**

$E_{gp}(t)$

$C_{j-1}$

$C_{gp}(t-1)$

62.1     62.2

$2\frac{N}{2}$

**FIG.10c**

FIG. 11

FIG.12